# EUROPEAN PATENT APPLICATION

(11) **EP 0 896 199 A1**
(43) Date of publication of application: **10.02.1999**
(21) Application number: 98201917.6
(22) Date of filing: 02.06.1998
(51) Int. Cl.: G01B 3/10

(54) **Electronic tape measure**

(30) Priority: 07.08.1997 GB 9716915
(71) Applicant: Trenfield, K., Glen Parva Estate, Leicester LE2 9RQ (GB)
(72) Inventor: Trenfield, K., Glen Parva Estate, Leicester LE2 9RQ (GB)

(57) **Abstract**

An electronic tape measure is used to divide measured distances in half. The tape measure is equipped with an LCD display and a sensor for detecting the extension of the tape. For each millimetre that the tape is extended, the LCD displays an increase of half a millimetre. In this way, the value displayed equates to half the measured length.

## Description

The consist of this inventive step, is a counter module which picks up positive movements of one millimetre movements of a metric measuring tape, then adds or subtracts point five of a millimetre to a L C D.

### RELATIVE STATE OF ART WITH CITATIONS

National statistics has recently proven that in the UK alone there is one out of every six people that are numerically deficient.
This figures give rise to the number of skilled construction workers that may have some problems working out division of materials and like wise tasks with a tape measure.Skilled construcion workers have always used there brains to work out numerical problems, this how ever slows the worker down, and in some cases the production comes to a halt. Even though the brains of a persons will work the division out to a millimetre it still takes a bit of time.
The invention here aims to lessen that time by equalising the measured length in to its centred point ..

### DISCLOSURE OF THE INVENTION

Referring to the invention,the equalizeing of a measured length is displayed in the components of a counter modules, L C D . The counter module picks up increasesions or decreasesions of one millimetre movements of the measuring tape which is being extended , then displays on its L C D in point five of that millimetre that has been extended of the measuring tape. The same thing happens when the measuring tape is being subtracted back to its start position ,but point five of a millimetre is deducted of the already accounted for centred point.

### ADVANTAGEOUS OF THE INVENTION

The half distance of an object is considered to be the centred point ,to find the centred point of some thing is to find the quarter point aswell and so on ...
On these principles alone it makes dividing of objects to the operative of the measuring device more capable and more efficient.

### DESCRIPTION OF AT LEAST ONE WAY OF THE INVENTION WORKING, ILLUSTRATED TO DRAWINGS

At its start position as example on the drawings, (12) is a metal retaining hook to keep the measuring tape (14) from going pass its start position when not in use , this is due to the coil mechanism of the tape wheel.
When (12) is pulled by hand operation the measuring tape (14) will uncoil its self of the measuring tape wheel (7) by the means of rotation on a shaft.
With the measuring tape (14) being extended at one millimetre a time , by the retaining hook(12) being pulled and the tape wheel (7) rotating on a shaft to let the measuring tape (14) extend.
(15) Which are round one whole edge of the tape wheel (7), are positive readings of one millimetre extension of the measuring tape (14), to the counter modules increasesion pin (2). The increasesion pin (2) can only read the positive movements of the increasesion of one millimetre movements of print(15) because of the measuring tapes wheels (7) rotation when being extended..
Number (2) will count for how many one millimetre positive print(15) have gone by the increasesion pins point of origin (2) from the start of the measuring tapes wheel rotating (7),then give to its counter modules component, the LCD(8).The electronic data that it has pick up of the positive print(15). The LCD(8) will take in to account for every one millimetre positive print (15) and display point five of a millimetre to every one of the one millimetre print(15) that goes by the increasesion pin point of origin(2), there for giving you the instate half of what you have measured on the measuring tape(14).
Number(16) which is the print for the decreaseion of the measuring tape(14), is placed on the opposite edge of the tape wheel(7) to which the increasesion print(15) is on. Like the increasesion print (15), the decreaseion print (16) is only readable to its decreaseion counter module pin (1) when the measuring tape (14) is being decreasesded, the print is one millimetre to one millimetre apart.
Number (1) the decreaseion pin on the counter module(5) gives subtraction of one millimetre to the LCD(8),which in turn will take point five of a millimetre of the already accounted for centred distance, which the inceaseion pin (2)and the increasesion print (16) has already accounted for. So for every one millimetre decreased of the measuring tape (14), the decreaseion print (16) and the decreaseion pin(1) along with the LCD (8) will take of point five of a millimeter of the displayed centred distance giving you the instant half from the tape measures (14) casings edge (10) to the end of the retaining hook (12).
Number (6) the battery for powering the counter module.
Numbers (3/4) are the on and off bottoms for the counter module to be used or not.

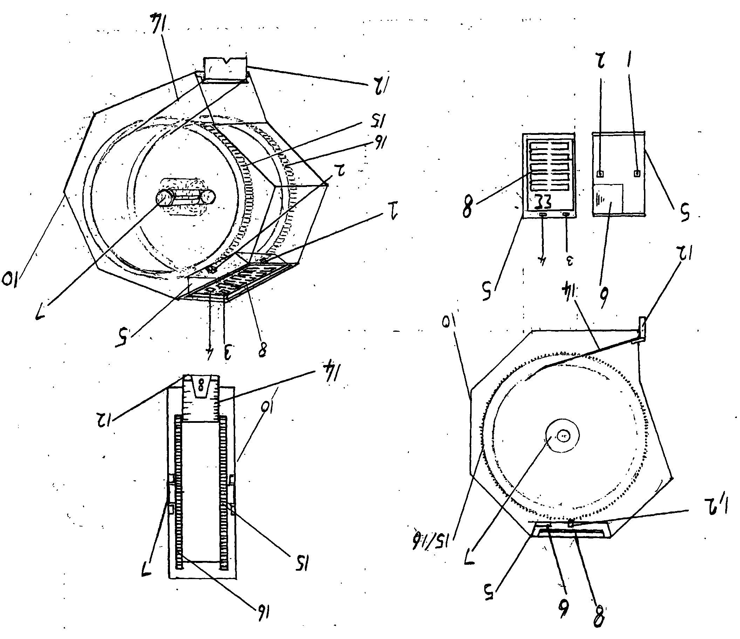

## Claims

1. A measuring device that will measure one whole length of an object, then equalise then length of the object into two equal distances. By the means of a counter module with an LCD and a printed circuit on the edge of a coiled wheel, measuring tape on or off by rotation.
To every one millimetre lengthened of the measuring tape the LCD will display point five of a millimetre, adding them together as the distance of the millimetres on the measuring tape gets longer.

2. Two printed circuits as claimed in claim one, to which rotate when the measuring tape increase or decrease by the means of the measuring tapes coiled wheel rotating to let on measuring tape on or off

3. As claimed in claims 1/2 printed circuit to which is only readable on the increaseion of the measuring tape at one millimetre per time by the increaseion pin on the bottom of a counter module.

4. As claim in claim 2/3 printed circuit that is only readable to the decreaseion pin on the bottom of the counter module because of the way in which the coiled tape wheel spins.

5. To which is claimed in claims 1/3/4 a counter module increaseion pin which pick up the movement of one millimetres of the printed increaseion print on the edge of the coiled tape wheel by the motion of its movement.

6. To which is claimed in claim 5 a decreaseion pin on the bottom of a counter module , can only read the one millimetre print of the decision of the measuring tape by the motion of the coiled measuring tape wheel letting tape when letting the tape recoil its self.

7. As claimed in claim 3/4/5/6 increasing pin on the bottom of the counter module detects increasing of the measure tape by the way that the wheel which is holding the tape on spins. Letting the increases print of one millimetre per one millimetre of measure tape go by the point of origin of the incrasesion pin which will add each time this happens to an LCD point five of a millimetre.

8. As claimed in claim 4 a pin to which is attach to the bottom of a counter module, and also above the decreaseion print on the edge of the coiled tape wheel. Is able to detect the decreaseion of one millimetre on the measuring tape by the means of the decreaseion print on the tape wheel being detected by the decreaseion pin on the bottom of the counter module. This pin subtracts point five of a millimetre of the
Already accounted for instant half on the LCD.

9. As claimed in claim 7/8 the extent of one millimetre or decision of one millimetre is accounted for by the LCD displaying point five of each millimetre or subtracting point five of a millimetre to which has already been accounted for by the appropriate mechanisms of the invention.

10. As claimed in claim 9 the centre measurement of an object can also be deducted to the quarter measurement and so on .....
